Europäisches Patentamt

European Patent Office

Office européen des brevets

(11) Publication number: **0 151 804**
**B1**

(12) **EUROPEAN PATENT SPECIFICATION**

(45) Date of publication of patent specification: **22.02.89**

(51) Int. Cl.⁴: **C 03 B 37/028**

(21) Application number: **84116351.2**

(22) Date of filing: **27.12.84**

(54) Method for producing multi core optical fibers.

(30) Priority: **27.12.83 JP 244419/83**

(43) Date of publication of application:
**21.08.85 Bulletin 85/34**

(45) Publication of the grant of the patent:
**22.02.89 Bulletin 89/08**

(84) Designated Contracting States:
**DE FR GB NL**

(56) References cited:
**US-A-3 193 363**
**US-A-3 328 143**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Suzuki, Shuzo c/o Yokohama Works of Sumitomo**
**Electric Industries Ltd. No. 1, Taya-cho**
**Totsuka-ku Yokohama-shi Kanagawa-ken (JP)**

Inventor: **Chigusa, Yoshiki c/o Yokohama Works of Sumitomo**
**Electric Industries Ltd. No. 1, Taya-cho**
**Totsuka-ku Yokohama-shi Kanagawa-ken (JP)**

Inventor: **Matsui, Kazunori c/o Yokohama Works of Sumitomo**
**Electric Industries Ltd. No. 1, Taya-cho**
**Totsuka-ku Yokohama-shi Kanagawa-ken (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

EP 0 151 804 B1

Courier Press, Leamington Spa, England.

**Description**

The present invention relates to a method for producing a flat-type multi-core optical fiber, comprising: supporting upper ends of plural optical fiber preforms each comprising a core and a cladding in support means such that distances between the adjacent preforms are substantially the same, melting the other ends of the preforms and simultaneously drawing the preforms whilst applying a constant tension.

Such a method is known from US—A—3 193 363.

An optical fiber comprises a core which is surrounded by a cladding having a smaller refractive index than that of the core. The method for the production of the optical fiber fundamentally comprises two steps, one of which is a step for producing the optical fiber preform and the other of which is a step for drawing the preform to obtain the optical fiber.

Among the optical transmission characteristics of the optical fiber, the loss characteristic due to absorption of light, the distribution of the refractive index in the core, and the frequency characteristic due to said distribution depend on various conditions during the production of the preform. The size and strength of the optical fiber depend on the drawing conditions.

The produced optical fiber is covered with a plastic sheath and then with polyamide or polyethylene to produce an optical fiber cable. For multiplex transmission and/or for miniaturization of the cable, plural optical fibers are integrated in one cable. In case of such integration of the fibers, if each fiber is covered with plastics and further polyamide or polyethylene, the cable becomes bulky. Thus, it is difficult to integrate more than a certain number of optical fibers in one cable.

Recently, a multi core optical fiber is, therefore, increasingly used for multiplexing of the cable.

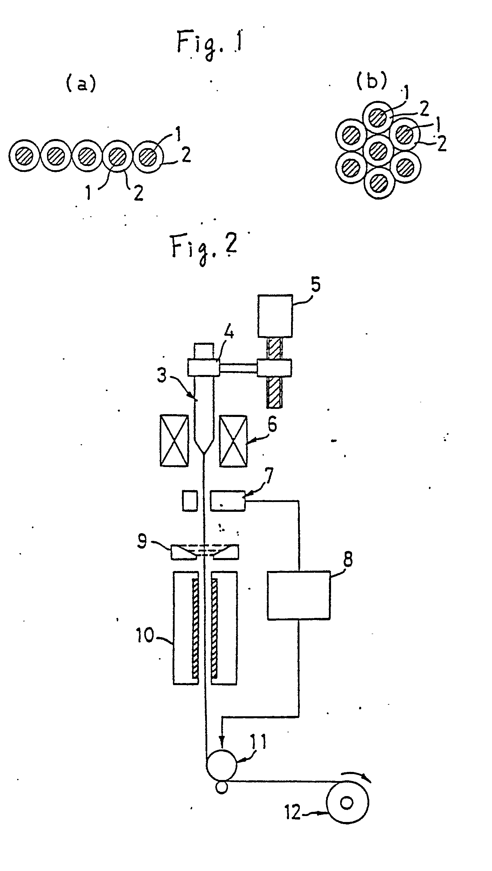

Multi core optical fibers include, for example, the flat type as shown in Figure 1a and the star type as shown in Figure 1b. The flat type multi core optical fiber comprises cores 1 each covered with cladding 2 which are arranged in parallel with each other with the adjacent claddings being contacted. The star type multi core optical fibre comprises a center fiber and plural satellite fibers surrounding the center one. One of the characteristics of these multi core optical fiber is that the claddings of the adjacent fibers are fused together and materially integral with each other, as shown in US—A—3,193,363.

As shown in Figure 2, the conventional multi core optical fiber may be produced by bundling the optical fiber preforms 3 each comprising the core and the cladding in the same arrangement as that of the multi core optical fiber to be produced, downwardly moving the bundle of the preforms by a supporting means 4 which is driven by a motor 5, heating firstly the bottom end of the bundle 3 in a furnace 6 kept at a temperature of 2,000°C or higher to soften it and then passing the bundle through the furnace 6. After passing the furnace, the diameter of the preform is measured by an apparatus 7 for measuring the diameter. An output signal made by the apparatus 7 is transferred to a diameter controlling circuit 8 and the measured diameter is compared with a predetermined value of the diameter. If there is any difference between them, a controlling signal corresponding to the difference is transferred to a capstan 11 to control its winding rate and in turn to control the diameter of the fiber. The thus drawn multi-core optical fiber is then coated with a coating liquid (e.g. a plastic solution) in a batch 9, dried in the second furnace 10, passed through the capstan 11 and wound by a winder 12.

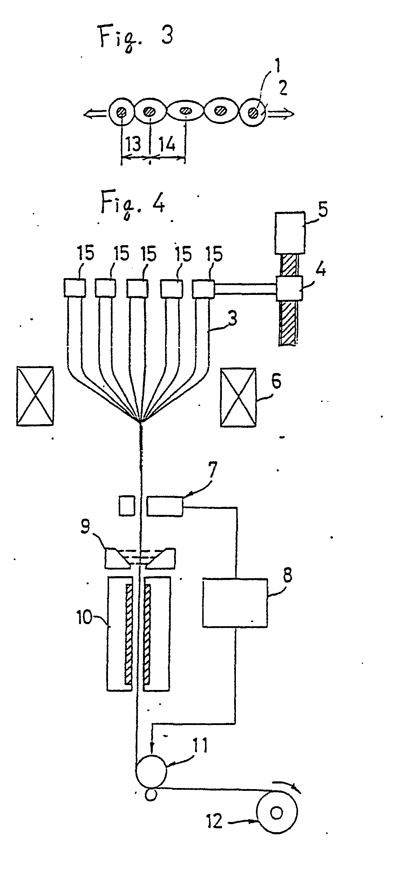

When connecting the elemental optical fibers of the thus produced multi-core optical fiber, the core distances between the adjacent elemental fibers should be made substantially the same to decrease transmission loss at the connection. When the flat type multi-core optical fiber is produced by the above-described conventional method, the cladding of the middle optical fibers are affected by the surface tension of the claddings on both sides. Thus, the cross sections of the core 1 and the cladding 2 are eliptically deformed as shown in Figure 3, so that it is difficult to make the core distances uniform.

An object of the invention is to provide a method for producing a flat-type multi-core optical fiber in which the core distances between the adjacent elemental optical fibers are substantially uniform.

According to the present invention the method defined in the first paragraph of this specification is characterised in that the preforms are held in respective individual supporting means and in that at least some of the preforms meet each other at a slant substantially where they are melted.

Now, the present invention will be illustrated by way of example by making reference to the accompanying drawings, in which:

Figure 1a is a cross section of a flat type multi core optical fiber;

Figure 1b is a cross section of a star type multi core optical fiber;

Figure 2 schematically shows a conventional method for producing a multi core optical fiber;

Figure 3 is a cross section of a multi core optical fiber produced by the conventional method shown in Figure 2;

Figure 4 schematically shows an embodiment of the method of the present invention;

Figure 5 is a cross section of a multi core optical fiber produced by the method shown in Figure 4; and

Figure 6 schematically shows another embodiment of the method of the present invention.

As shown in Figure 4, plural, for example, five optical fiber preforms 3 are each vertically sustained by a corresponding chuck 15 and arranged substantially in one plane. The chucks are held by the supporting means 4 so that all distances between the adjacent preforms are substantially the same. The bottom ends of the preforms are heated in the furnace 6 to melt them. Then, the supporting means is downwardly moved by means of the motor 5. The half-melted preforms are contacted with each other to form a multi core optical fiber preform. In this state, the preform is further moved down and passed through the furnace 6 and then its diameter is measured by the apparatus 7.

An output signal made by the apparatus 7 is transferred to the diameter controlling circuit 8 and the measured diameter is compared with a predetermined value of the diameter. If there is any difference between them, a controlling signal corresponding to the difference is transferred to a capstan 11 to control its winding rate so as to apply constant tension to the preform for controlling the diameter of the preform. The thus drawn multi core optical fiber is then coated with a coating liquid (e.g. a plastic solution) in the bath 9, dried in the second furnace 10, passed through the capstan 11 and wound by the winder 12.

The cross section of the thus drawn multi core optical fiber varies with the melting temperature T of the optical fiber preform and the drawing rate v. For example, the optical fiber is drawn under the following conditions:

$$T: 2,000 - 2,300°C$$
$$v: 50 - 150 \text{ m/min.,}$$

there is produced a multi core optical fiber in which the core distance d is constant and the materials of the adjacent claddings 2 are partially fused together.

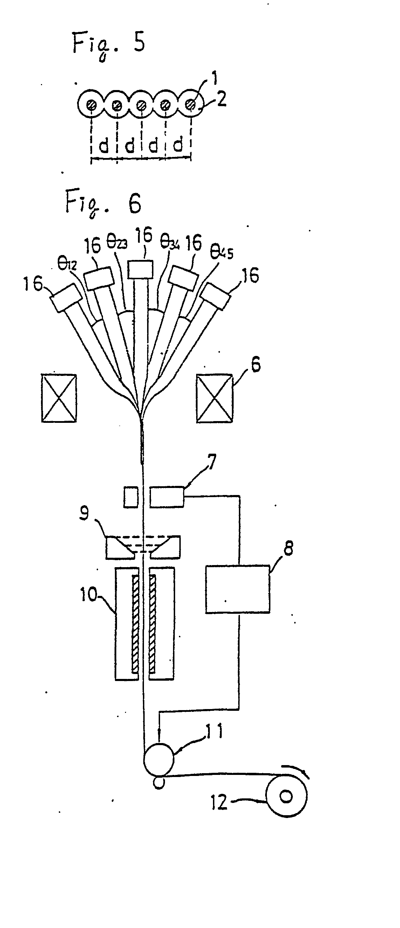

Alternatively, some or all of the optical fiber preforms are slantingly sustained at an angle $\theta_{12}$, $\theta_{23}$, $\theta_{34}$ or $\theta_{45}$ between the axes of the adjacent preforms so that the bottom ends of the preforms substantially meet each other. The preforms are heated and drawn in the same manner as explained above. When the multi core optical fiber is produced by the method of Figure 6, the outward tensile force applied to the middle preforms is greatly decreased and the deformation of the cross sections of the elemental optical fibers can be disregarded.

In the embodiments of Figure 6, the typical angles between the adjacent preforms are as follows:

$$\theta_{12} = \theta_{45} = 20°$$
$$\theta_{23} = \theta_{34} = 15°$$

## Claims

1. A method for producing a flat-type multi-core optical fiber, comprising supporting upper ends of plural optical fiber preforms (3) each comprising a core (1) and a cladding (2) in support means (4, 15) such that distances between the adjacent preforms (3) are substantially the same, melting the other ends of the preforms (3) and simultaneously drawing the preforms whilst applying a constant tension, characterised in that the preforms are held in respective individual supporting means (4 or 15) and in that at least some of the preforms (3) meet each other at a slant substantially where they are melted.

2. A method according to Claim 1, characterised in that all the preforms (3) are held in vertically aligned supporting means.

3. A method according to Claim 1, characterised in that some of the preforms are held in slanted supporting means.

4. A method according to Claim 1, 2 or 3 characterised in that the preforms (3) are melted at a temperature of 2,000 to 2,300°C.

5. A method according to any one of Claims 1 to 4 characterised in that the preforms are drawn at a rate of 50 to 150 m/min.

## Patentansprüche

1. Verfahren zur Herstellung einer mit mehreren Kernen versehenen Flachtyp-Faser, umfassend:—
Unterstützen der oberen Enden einer Vielzahl von optischen Faser-Vorformen (3), von denen jede einen Kern (1) und eine Umhüllung (2) aufweist in Trägermitteln (4, 15), so daß abstände zwischen den benachbarten Vorformen (3) im wesentlichen die gleichen sind, schmelzen der anderen Enden der Vorformen (3) und gleichzeitiges Ziehen der Vorformen während eine konstante Zugspannung angelegt wird, dadurch gekennzeichnet, daß
die Vorformen in entsprechenden einzelnen Trägermitteln (4, 15) gehalten werden, und daß wenigstens einige der Vorformen (3) im wesentlichen dort wo sie geschmolzen werden, unter einer Neigung zusammentreffen.

2. Verfahren nach Anspruch 1, dadurch gekennzeichnet, daß alle Vorformen (3) in senkrecht ausgerichteten Trägermitteln gehalten werden.

3. Verahren nach Anspruch 1, dadurch gekennzeichnet, daß einige der Vorformen in geneigten Trägermitteln gehalten werden.

4. Verfahren nach Anspruch 1, 2 oder 3, dadurch gekennzeichnet, daß die Vorformen (3) bei einer Temperatur von 2000 bis 2300°C geschmolzen werden.

5. Verfahren nach einem der Ansprüche 1 bis 4, dadurch gekennzeichnet, daß die Vorformen mit einer Geschwindigkeit von 50 bis 150 m/min gezogen werden.

## Revendications

1. Un procédé pour produire une fibre optique à coeurs multiples du type plat consistant à supporter les extrémités supérieures de plusieurs préformes de fibres optiques (3) comprenant chacune un coeur (1) et une gaine (2) à l'aide de dispositif de support (4, 15) de manière telle que les distances entre les préformes adjacentes (3) soient substantiellement les mêmes, à fondre les autres extrémités des préformes (3) et à étirer simultanément les préformes pendant qu'une tension constante est appliquée, caractérisé en ce que les préformes sont maintenues dans des dispositifs de support individuels respectifs (4 ou 15) et en ce que au moins un certain nombre de préformes (3) sont en contact les unes avec les autres suivant une inclinaison substantiellement là où elles sont fondues.

2. Un procédé selon la revendication 1 caractérisé en ce que toutes les préformes (3) sont maintenues dans des dispositifs de support alignés verticalement.

3. Un procédé selon la revendication 1 caractérisé en ce qu'un certain nombre de préformes est maintenu dans des dispositifs de suport inclinés.

4. Un procédé selon la revendication 1, 2 ou 3 caractérisé en ce que les préformes (3) sont fondues à une température de 2000 à 2300°C.

5. Un procédé selon l'une quelconque des revendications 1 à 4 caractérisé en ce que les préformes sont étirées à un taux de 50 à 150 m/ min.

Fig. 1

(a)

(b)

Fig. 2

Fig. 3

Fig. 4

Fig. 5

Fig. 6